# EUROPEAN PATENT APPLICATION

(11) **EP 4 129 908 A1**
(43) Date of publication of application: **08.02.2023**
(21) Application number: 21776233.5
(22) Date of filing: 11.03.2021
(51) Int. Cl.: C01F 7/02, C01F 7/44, C08K 7/14, C08L 81/02, C08L 101/02, C08G 75/0213, C08G 75/0259

(54) **RESIN COMPOSITION FOR MOLDING, AND MOLDED BODY**

(30) Priority: 27.03.2020 JP 2020057863
(71) Applicant: DIC Corporation, Tokyo 174-8520 (JP)
(72) Inventor: KANEMATSU, Takayuki, Sakura-shi, Chiba 285-8668 (JP); TAKADA, Shingo, Sakura-shi, Chiba 285-8668 (JP); ABE, Fumiaki, Ichihara-shi, Chiba 290-8585 (JP); NARA, Saori, Ichihara-shi, Chiba 290-8585 (JP); ASANO, Kiichi, Ichihara-shi, Chiba 290-8585 (JP)
(74) Representative: TBK
(86) International application number: PCT/JP2021/009702
(87) International publication number: WO 2021/193079

(57) **Abstract**

Provided is a resin composition for molding containing a polyarylene sulfide resin that forms a molded body having all of mechanical strength, heat cycle characteristics, and thermal conductivity in a well-balanced manner. Specifically, provided are a resin composition for molding containing a plate-like filler having an aspect ratio of 10 to 500 (A), a polyarylene sulfide resin (B), a thermoplastic resin having a glass transition temperature (Tg) of 20°C or lower (C), and glass fibers (D) as essential components, the plate-like filler (A) being contained in an amount of 30 to 70 parts by mass relative to 100 parts by mass of the sum of the plate-like filler (A), the polyarylene sulfide resin (B), the thermoplastic resin (C), and the glass fibers (D), and a molded body of the resin composition for molding.

## Description

### Technical Field

The present invention relates to a resin composition for molding containing a polyarylene sulfide resin, and a molded body.

### Background Art

In recent years, electrical and electronic parts and automotive parts require higher durability, and thus various improvements have been made in a resin composition for molding containing a polyarylene sulfide resin. A molded body also requires excellent physical properties (heat cycle characteristics) in which the molded body can repeatedly tolerate a usage environment where a temperature rapidly increases from low temperatures to high temperatures or decreases from high temperatures to low temperatures.

In response to this situation, PLT 1 describes a resin composition for molding containing a polyarylene sulfide resin, a thermoplastic elastomer, and glass fibers. Since this resin composition for molding contains the elastomer and the glass fibers, a molded body thereof has both appropriate toughness and excellent mechanical strength in an ordinary state, but does not have sufficient heat cycle characteristics. Thus, a molded product does not yet have sufficient mechanical strength, and for example, the molded product may be cracked.

PLT 2 describes a resin composition for molding containing a polyarylene sulfide resin, a thermoplastic elastomer, glass fibers, talc, and wollastonite. A molded product formed from the resin composition for molding has insufficient thermal conductivity or insufficient heat cycle characteristics due to low thermal conductivity of talc and wollastonite. Thus, the molded product does not yet have sufficient mechanical strength, and for example, a molded body may be cracked.

For example, a polyarylene sulfide resin is increasingly adopted for a metal replacement molded part or a resin-metal composite molded part such as an insert molded part from the viewpoints of low hygroscopicity and heat resistance of the polyarylene sulfide resin. A metal itself has excellent thermal conductivity. Thus, a molded product is likely to be cracked as described above when heat is not appropriately conducted through a contact interface between the polyarylene sulfide resin composition and the metal under any environment.

### Citation List

### Patent Literature

PLT 1: Japanese Unexamined Patent Application Publication No. 2006-36833
PLT 2: Japanese Unexamined Patent Application Publication No. 2017-88688

### Summary of Invention

### Technical Problem

An object of the present invention is to provide a resin composition for molding containing a polyarylene sulfide resin that can form a molded body having all of mechanical strength, heat cycle characteristics, and thermal conductivity in a well-balanced manner by using a filler having a shape other than a fibrous shape and more excellent thermal conductivity in addition to a fibrous filler such as glass fibers.

### Solution to Problem

The inventors of the present invention have intensively studied in view of the circumstances, and found that a molded body that can solve the aforementioned problem is obtained from a resin composition prepared so as to contain a plate-like filler having a specific aspect ratio at a specific content proportion as the filler having a shape other than a fibrous shape and more excellent thermal conductivity. Thus, the present invention has been solved. Specifically, the present invention provides a resin composition for molding containing as essential components a plate-like filler having an aspect ratio of 10 to 500 (A), a polyarylene sulfide resin (B), a thermoplastic resin having a glass transition temperature (Tg) of 20°C or lower (C), and glass fibers (D), the plate-like filler (A) being contained in an amount of 30 to 70 parts by mass relative to 100 parts by mass of the sum of the plate-like filler (A), the polyarylene sulfide resin (B), the thermoplastic resin (C), and the glass fibers (D), and a molded body of the resin composition for molding.

### Advantageous Effects of Invention

According to the present invention, a molded body having all of mechanical strength, heat cycle characteristics, and thermal conductivity in a well-balanced manner can be obtained.

### Description of Embodiments

Hereinafter, the present invention will be described in detail.

In the present invention, a plate-like filler having an aspect ratio of 10 to 500 (A) is used at a specific content proportion (content). The plate-like filler includes an organic compound filler and an inorganic compound filler, and an inorganic compound filler is preferred in terms of more excellent thermal conductivity.

Any commonly known inorganic compound filler can be used as an inorganic compound filler having an aspect ratio of 10 to 500. Examples of the inorganic compound filler include alumina (aluminum oxide), silicon nitride, boron nitride, and aluminum nitride. From the viewpoint of obtaining a molded product having higher stability and excellent thermal conductivity, an inorganic compound filler having a thermal conductivity of 10 W/m/K or more is preferably used. Among them, α-alumina is preferred from the viewpoint of achieving all of higher mechanical strength, high heat cycle characteristics, and good thermal conductivity. Boron nitride is preferred from the viewpoint of achieving all of good mechanical strength, good heat cycle characteristics, and higher thermal conductivity. Since α-alumina has higher elastic modulus than boron nitride and is cheaper than boron nitride, a larger amount of α-alumina can be used to increase the strength. On the other hand, since boron nitride has much higher thermal conductivity than α-alumina, boron nitride can be used in a smaller amount than α-alumina to easily achieve more excellent thermal conductivity.

In the present invention, it is necessary that the filler have a plate shape and an aspect ratio of 10 to 500. The plate shape means a particle shape having a smaller thickness than the length or widthwise direction thereof, and may be sometimes called lamina, scale, or flake. In the present invention, the maximum possible length of a surface having the maximum area of one particle is defined as a particle diameter. The particle diameter of the particle can be measured by a laser diffraction particle size distribution measurement device. The thickness thereof can be determined as a thickness from a photograph obtained by observation with a scan electron microscope (SEM). The aspect ratio can be estimated from a ratio of the obtained particle diameter and thickness. In the present invention, the aspect ratio is determined from the average of particle diameters determined as described above and the average of thicknesses determined from 50 plate-like fillers as targets by the aforementioned method. From the viewpoint of moldability, the average particle diameter is 1 to 50 um, and preferably 2 to 30 um, the average thickness is 0.05 to 5 µm, and preferably 0.1 to 3 um, and the aspect ratio is preferably 12 to 100. From the viewpoint of handleability and industrial availability, the aspect ratio is the most preferably within the range of 12 to 30.

The present inventors have found that when as the plate-like filler (A), a plate-like filler having an aspect ratio of 10 or more is mixed in a conventional mixture of a polyarylene sulfide resin, a thermoplastic resin, and glass fibers, a decrease in strength especially at a high temperature due to use of the thermoplastic resin is effectively prevented, and heat cycle characteristics are much higher than when the same use amount of a plate-like filler that has an aspect ratio of less than 10 and is formed from the same compound is mixed.

Such a filler having a high aspect ratio may be a commercially available filler or a synthesized filler. For example, a plate-like α-alumina particle having a specific aspect ratio range can be produced by a commonly known production method such as a hydrothermal method or a flux method. The plate-like α-alumina particle can be produced by the flux method, for example, a method for producing an α-alumina particle in which an aluminum compound is calcined in the presence of a shape-controller including a molybdenum compound and silicon or a compound containing a silicon atom.

In the aforementioned production method, the obtained α-alumina particle contains not only molybdenum but also silicon or the compound containing a silicon atom in the particle. For example, the zeta potential of such an α-alumina particle has an isoelectric point at an acidic pH due to the contained molybdenum, and thus good dispersibility of the α-alumina particle in a polyarylene sulfide resin (B) or the like described later can be expected.

When the α-alumina particle containing silicon or the compound containing a silicon atom is treated with, for example, a silane-coupling agent, a chemical bond is formed between the silicon or the silicon compound contained in the α-alumina particle and a silanol group in the silane-coupling agent. Thus, a surface treatment can be surely achieved. An organic atomic group other than a reactive group such as the silanol group in the silane-coupling agent has an effect of enhancing affinity with the polyarylene sulfide resin (B) or the like described later, and thus the same good dispersibility as described above can be expected.

To achieve all of mechanical strength, heat cycle characteristics, and thermal conductivity, the filler (A) is contained in an amount of 30 to 70 parts by mass relative to 100 parts by mass of the sum of the filler (A), the polyarylene sulfide resin (B) described later, a thermoplastic resin (C) described later, and glass fibers (D) described later. From the viewpoint of facilitating dispersion, the amount of the filler (A) is preferably 50 parts by mass or less.

In the present invention, the polyarylene sulfide resin (B) is a generic term of polymers having a structure including aromatic rings bonded through a sulfur atom in its main chain. Hereinafter, the polyarylene sulfide resin (B) is sometimes abbreviated as PAS resin (B).

In terms of heat resistance, mechanical characteristics, and chemical resistance of a molded product to be obtained, it is preferable that the PAS resin (B) have a repeating unit represented by the following general formula (1), that is, be a so-called polyphenylene sulfide resin (hereinafter abbreviated as PPS resin).

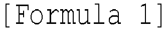

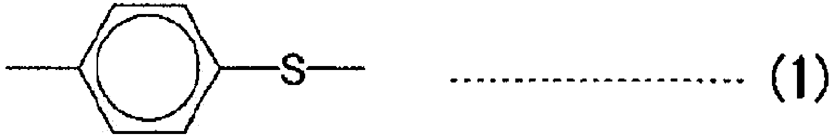

The PAS rein (B) can contain another copolymer constituent unit, as necessary. Specific examples of the copolymer constituent unit that can be contained in this case include, but not particularly limited to, copolymer constituent units represented by the following structural formulae (2) to (8).

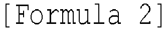

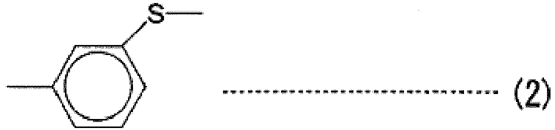

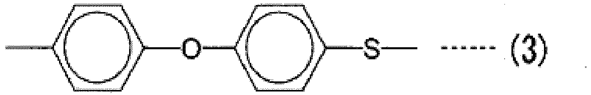

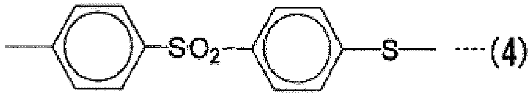

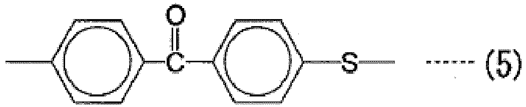

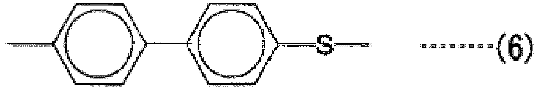

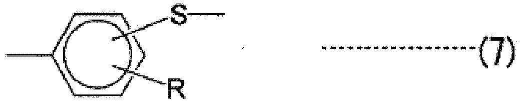

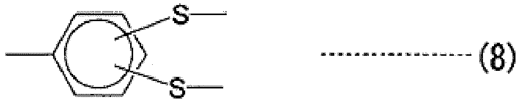

The PAS resin (B) used in the present invention is preferably a PPS resin containing 70 mol% or more of the repeating unit represented by the general formula (1) since the PAS resin (B) tends to expert characteristics of a polymer having excellent heat resistance, mechanical characteristics, and chemical resistance.

When the PAS resin (B) containing an aromatic ring having three or more binding groups as represented by the general formula (8) is used, the melt viscosity of the resin composition for molding during molding is high, and the flowability of the composition tends to be inhibited. To prevent this tendency, the proportion of such a structure in the PAS resin (B) is preferably 5 mol% or less, and particularly preferably 3 mol% or less.

A method for producing the PAS resin is not particularly limited, and may be, for example, the following methods.
(i) A method for polymerizing an aromatic dihalogen compound in the presence of sulfur and sodium carbonate.
(ii) A method for polymerizing an aromatic dihalogen compound in a polar solvent in the presence of a sulfidizing agent.
(iii) A method for self-condensing p-chlorothiophenol.
(iv) A method in which an organic polar solvent and an aromatic dihalogen compound are mixed and heated, and a water-containing sulfidizing agent is added to the mixture at such a rate that the amount of water in the reaction mixture falls within the range of 2 to 50 mol% of the organic polar solvent, to react the aromatic dihalogen compound with the sulfidizing agent.

There are various other methods, and the PAS resin obtained by any of these methods can be used.

For example, a reactive functional group such as a hydroxy group, a carboxy group, an amino group, a mercapto group, an epoxy group, an acid anhydride group, an isocyanate group, and a vinyl group can be introduced into such a PAS resin (B) by a commonly known method.

It is preferable that the PAS resin (B) used in the present invention be a PAS resin having a melt flow rate determined at 316°C under a load of 5,000 g (orifice: a diameter of 0.0825±0.002 inches and a length of 0.315±0.001 inches) by ASTM D1238-86 of 300 to 15,000 g/10 min, and particularly preferably 400 to 3,000 g/10 min since it has good moldability. The shape of the used PAS resin (B) is not particularly limited, and may be a granular shape like a pellet or a powder shape.

When the melt flow rate is too low, the viscosity of the resin composition for molding during molding is high, and the flowability of the composition tends to be inhibited. This may cause problems such as molding failure. Therefore, the low limit of the melt flow rate is preferably 300 g/10 min.

To improve shock resistance or the like, the resin composition for molding according to the present invention contains the thermoplastic resin (C) having a glass transition temperature (Tg) of 20°C or lower. Examples thereof include a rubber and a polyolefinic thermoplastic resin having a glass transition temperature (Tg) of 20°C or lower.

The thermoplastic resin (C) is preferably the thermoplastic resin that can be melted, mixed, and dispersed at a temperature at which the PAS resin (B) is kneaded. Therefore, the thermoplastic resin having a melting point of 280°C or lower and rubber elasticity at room temperature is preferred.

The glass transition temperature and the melting point are values measured by a differential scanning calorimeter ("PYRIS Diamond DSC" manufactured by PerkinElmer Co., Ltd.) in accordance with JIS K 7121.

To express shock resistance of the molded product to be obtained even at a low temperature of 0°C or -15°C, the glass transition temperature (Tg) of the thermoplastic resin (C) needs to be 20°C or lower. When the glass transition temperature (Tg) is too low, failure is likely to be caused, for example, a part of the thermoplastic resin (C) soaks out the molded body during use at a high temperature. Therefore, a preferable glass transition temperature range is -60°C to 20°C.

Examples of the rubber having a glass transition temperature (Tg) of 20°C or lower include isoprene rubber (IR), butadiene rubber (BR), styrene-butadiene rubber (SBR), chloroprene rubber (CR), nitrile rubber (NBR), and butyl rubber (IIR).

As the thermoplastic resin (C), the polyolefinic thermoplastic resin is preferably used since the polyolefinic thermoplastic resin is especially excellent in affinity, is easy to mix with the PAS resin (B), and is small in deterioration by heat or light, and the shock resistance or the like of the molded product is significantly improved. Examples thereof include a copolymer of α-olefins, a copolymer of α-olefins with esters of α,β-unsaturated carboxylic acid, and a copolymer of α-olefins with unsaturated esters of carboxylic acid. Specific examples thereof include an ethylene-propylene copolymer, an ethylene-butene copolymer, an ethylene-methyl acrylate copolymer, an ethylene-ethyl acrylate copolymer, and an ethylene-vinyl acetate copolymer. As the thermoplastic resin (C), a polyolefinic thermoplastic resin containing a polymerization unit of an olefin can be suitably used in terms of excellent properties described above.

For example, the polyolefinic thermoplastic resin is preferably a polyolefinic thermoplastic resin having a functional group such as a hydroxy group, a carboxy group, an amino group, a mercapto group, an epoxy group (glycidyl ester group), an acid anhydride group, an isocyanate group, and a vinyl group, particularly preferably a polyolefinic thermoplastic resin having any one or more chemically bonded functional groups of a carboxy group, an acid anhydride group, or an epoxy group (glycidyl ester group), and among them a polyolefinic thermoplastic resin containing a polymerization unit of one or more types of (meth)acrylates having any functional group of a carboxy group, an acid anhydride group, or a glycidyl ester group, and another polymerization unit of an olefin. This is because the polyolefinic thermoplastic resin has good dispersibility with the PAS resin, the resin composition for molding that is uniformly mixed can easily be obtained, and the shock resistance and the like of the molded body are significantly improved.

The thermoplastic resin having the functional group can be obtained, for example, by using a monomer having a desired functional group as a copolymerization component during production of the thermoplastic resin (C). Examples of the thermoplastic resin having the functional group include a copolymer of ethylene and methyl (meth)acrylate or (meth)acrylic acid glycidyl ester. The thermoplastic resin (C) having no functional group described above may be reacted with a compound having a desired functional group to obtain the thermoplastic resin. Examples of the thermoplastic resin include an acid-modified ethylene-butene copolymer obtained by melt-kneading an ethylene-butene copolymer and maleic anhydride in the presence of a peroxide and the like.

The thermoplastic resin may have a plurality of the functional groups at the same time, and examples thereof include an α-olefin-maleic anhydride-(meth)acrylic acid glycidyl ester terpolymer.

The amount of the thermoplastic resin (C) added is not particularly limited. From the viewpoint of mechanical strength, particularly a balance between shock resistance and flexibility (bending strength), and heat cycle characteristics, it is preferable that the thermoplastic resin (C) be contained in an amount of 0.5 to 10 parts by mass relative to 100 parts by mass of the sum of the filler (A), the polyarylene sulfide resin (B), the thermoplastic resin (C), and the glass fibers (D) described later. When the amount of the thermoplastic resin (C) mixed falls within this range, both shock resistance and heat cycle characteristics can be met at a higher level, and a decrease in mechanical strength at a high temperature can be effectively prevented.

It is more preferable that a polyarylene sulfide resin having a reactive functional group and a polymer containing a polymerization unit of an olefin and a reactive functional group that is reactive with the reactive functional group contained in the polyarylene sulfide resin be used in combination as the polyarylene sulfide resin (B) and the thermoplastic resin (C), respectively. As compared with a case where a polyarylene sulfide resin having no reactive functional group and a polymer containing a polymerization unit of an olefin but no reactive functional group to be reacted with the reactive functional group contained in the polyarylene sulfide resin be used in combination as the polyarylene sulfide resin (B) and the thermoplastic resin (C), respectively, chemical mixing (integration of polymer molecules) with occurrence of chemical bonding, but not simple physical mixing, can achieve an effect of more finely dispersing the thermoplastic resin. Thus, high heat cycle characteristics can be exerted. It is more preferable that a polyarylene sulfide resin having a functional group that may be chemically bonded to the thermoplastic resin (C) and a polymer containing a polymerization unit of an olefin having four or more carbon atoms and having a functional group that may be chemically bonded to the resin (B) be contained in combination as the resin (B) and the thermoplastic resin (C), respectively. Examples of a combination of the functional groups include a combination of a hydroxy group and an isocyanate group and a combination of a carboxylic acid group and a glycidyl group (epoxy group) .

As the glass fibers (D), any commonly known glass fibers can be used. As the glass fibers, glass fibers obtained by gathering and bundling filaments, or glass fibers obtained by treating surfaces of filaments, for example, with a functional compound or polymer such as an epoxy-based compound, an isocyanate-based compound, a silane-based compound, or a titanate-based compound and bundling the filaments are preferably used. Examples of the form of the glass fibers include roving, chopped strand, and cloth.

It is preferable that the glass fibers in a chopped strand form be used as the glass fibers (D) especially in combination with the filler (A) since mechanical strength can be synergistically improved due to specific orientations in the molded product based on the shapes of the glass fibers (D) and the filler (A).

The fiber length of the glass fibers (D) is not particularly limited. For example, the fiber length is preferably 1 to 5 mm since the molded product can achieve both excellent mechanical strength and heat cycle characteristics in cooperation with the size and shape of the filler (A). The amount of the glass fibers added is not particularly limited. It is preferable that the glass fibers (D) be contained in an amount of 15 to 25 parts by mass relative to 100 parts by mass of the sum of the filler (A), the polyarylene sulfide resin (B), the thermoplastic resin (C), and the glass fibers (D). When the amount of the glass fibers (D) mixed falls within this range, shock resistance, heat cycle characteristics, and thermal conductivity are well balanced.

To the resin composition for molding according to the present invention, a filling material other than the aforementioned materials may be added without departing from the spirit of the present invention. Examples of the shape of the filling material include a powder particle, a needle, a sphere, a hollow, and a fibrous shape. The filling material may be a plate-like or scale-like filling material having an aspect ratio different from the plate-like filler. Specific examples thereof include a powder filling material such as calcium sulfate, calcium silicate, clay, talc, alumina, quartz sand, glass powder, metal powder, graphite, and carbon black, the plate-like or scale-like filling material having an aspect ratio different from the plate-like filler such as mica, a glass plate, sericite, metal foil such as aluminum flake, and graphite, a hollow filling material such as shirasu balloon, metal balloon, and glass balloon, an inorganic fibrous filling material such as carbon fibers, graphite fibers, whisker, metal fibers, and wollastonite, and an organic fibrous filling material such as aromatic polyamide fibers.

To the resin composition for molding according to the present invention, a known substance to be generally added to a thermoplastic resin other than the thermoplastic resin (C), that is, a plasticizer, a small amount of release agent, a lubricant, a heat-resistant stabilizer, a weather-resistant stabilizer, a foaming agent, an anti-rust agent, a flame retardant, a colorant, a crystallization promoting agent, a nucleating agent, or the like may be added.

It is preferable that the resin composition for molding according to the present invention form a molded body having a bending modulus of 10 GPa or more in accordance with ISO178. Since a modulus of 10 GPa or more is better strength (rigidity), a problem such as cracking is unlikely to occur.

A method for producing the resin composition for molding according to the present invention is not particularly limited, and any commonly known production method can be adopted. Examples of the method include a method in which the raw materials (A) to (D) are uniformly pre-mixed in a solid phase state as essential components at the same time or in any order, for example, using a Banbury mixer, a kneader, a roller, a single-screw or twin-screw extruder, or the like to prepare a powder-dispersed substance in which the filler (A) and the glass fibers (D) are uniformly dispersed in the raw materials (B) and (C).

Alternatively, the raw materials (A) to (D) are each supplied to an extruder or the like and sufficiently melt-kneaded to prepare the resin composition. Specifically, examples of the method include a method in which the dispersed substance obtained by pre-mixing the raw materials is supplied to a commonly known melt-kneading device such as a single-screw or twin-screw extruder, a Banbury mixer, a kneader, or a mixing roller, and mixed at a temperature of 250 to 420°C. The order of mixing the raw materials is not particularly limited. A method for melt-kneading all the raw materials as described above, a method in which some of the raw materials are melt-kneaded by the aforementioned method and the rest is melt-kneaded, a method in which some of the raw materials are melt-kneaded by a single-screw or twin-screw extruder and during the melt-kneading, the rest is mixed by a side-feeder or the like may be used. The polyarylene sulfide resin (B) and the thermoplastic resin (C) are melt-kneaded, the filler (A) and the glass fibers (D) are then added, and the mixture are melt-kneaded. Thus, the resin composition can be produced. It is preferable that after melt-kneading, a gas generated be removed by exposure to a vacuum state. A material in which the components are well dispersed can be obtained by thus producing the resin composition for molding.

The molded body according to the present invention is a part obtained by molding the resin composition for molding. For example, a known molding method such as injection molding, extrusion molding, drawing molding, blow molding, press molding, or spinning can be adopted in the molding. An injection molding condition is not particularly limited. For example, the temperature (cylinder temperature) during injection molding of the resin composition for molding is preferably 280°C or higher from the viewpoint of further improving flowability, and preferably 340°C or lower from the viewpoint of improving mechanical characteristics. On the other hand, the die temperature is preferably 120 to 170°C since an increase in strength is expected by increasing the degree of crystallization of a PAS resin phase.

In particular, the resin composition for molding according to the present invention is suitable for production of a metal insert molded body in which a metal part having a predetermined shape is embedded in the resin composition for molding and that has a desired shape, by injection molding. While the glass fibers (D) dispersed in the resin composition for molding are oriented in a flowing direction by injection molding, some of the fillers (A) that are smaller than the glass fibers (D) are oriented in a direction perpendicular to the flowing direction. Thus, mechanical strength against a stress in a direction vertical to the flowing direction is significantly increased. At the same time, the polyarylene sulfide resin (B) and the thermoplastic resin (C) are strongly adhered at an interface between the resins and a surface of the inserted metal part, and sufficiently follows expansion and contraction of the metal depending on a rapid change in temperature. Thus, a molded body having all of good mechanical strength, good heat cycle characteristics, and good thermal conductivity is obtained.

The molded body obtained from the resin composition for molding according to the present invention is heated or irradiated with far infrared radiation or microwave, as necessary, and exposed (annealed) to the same temperature as or a higher temperature than the temperature during molding over appropriate time. Thus, a molded body that is small in dimensional change and has excellent mechanical properties may be obtained.
A polyarylene sulfide resin having a reactive functional group and a polymer containing a polymerization unit of an olefin and a reactive functional group that is reactive with the reactive functional group contained in the polyarylene sulfide resin are selected as the polyarylene sulfide resin (B) and the thermoplastic resin (C), respectively, and combined. In this case, when a molding condition is inappropriately selected and a reaction of the polyarylene sulfide resin (B) and the thermoplastic resin (C) does not sufficiently proceed, the annealing may be effective.

The resin composition for molding according to the present invention has good mechanical strength, good heat cycle characteristics, and good thermal conductivity. Therefore, the resin composition for molding is particularly usable for a part requiring them, a box-shaped protecting and supporting member for electrical and electronic part integrated module, and a molded product in which a metal is inserted, such as a motor, and is further suitable for a structure part such as a housing, an electrical part case, and the like. The resin composition for molding can be used in various applications including electrical and electronic parts typified by a sensor, a LED lamp, a connector, a socket, a resistor, a relay case, a switch, a coil bobbin, a capacitor, a variable capacitor case, a light pickup, an oscillator, various terminal plates, a transformer, a plug, a printed board, a tuner, a speaker, a microphone, a headphone, a magnetic head case, a power module, a terminal stand, a semiconductor, a liquid crystal, a FDD carriage, a FDD chassis, a parabola antenna, and computer-related parts; home or office electrical product parts typified by a VTR part, a television-set part, an iron, a hair dryer, a rice cooker part, a microwave oven part, an acoustic part, an audio apparatus part such as an audio laser disk (registered trademark) and a compact disc, an illumination part, a refrigerator part, an air conditioner part, and a water-section apparatus part such as a water heater, a sensor for the water amount or temperature of a bath; machine-related parts typified by an office computer-related part, a telephone-related part, a facsimile-related part, a copying machine-related part, a jig for cleaning, and a lighter; expensive apparatus or precision machine-related parts typified by a microscope, a binocular, a camera, and a clock or a watch; and automobile and vehicle-related parts such as an alternator terminal, an alternator connector, an IC regulator, a potentiometer base for light dimmer, a relay block, an inhibitor switch, various valves such as an exhaust gas valve, various fuel-related, outlet, and inlet pipes, an air intake nozzle snorkel, an intake manifold, a fuel pump, an engine cooling water joint, a carburetor main body, a carburetor spacer, an exhaust gas sensor, a cooling water sensor, a hot water temperature sensor, a brake pad wear sensor, a throttle position sensor, a crankshaft position sensor, an air flow meter, a brake pad wear sensor, an air conditioner thermostat base, a hot-air flow control valve, a water pump impeller, a turbine vane, a distributor, a starter switch, an ignition coil and a bobbin thereof, a starter relay, a wire harness for transmission, a wind washer nozzle, an air conditioner panel switch board, a coil for a fuel-related electromagnetic valve, a fuse connector, a horn terminal, an electrical part insulation plate, a lamp socket, a lamp reflector, a lamp housing, a brake piston, a solenoid bobbin, an engine oil filter, an ignition device case, and motor-related parts (a wiper movable part, a power-window movable part, a brush holder for a radiator motor, an insulator, a rotor, a motor core, and a bus ring). In particular, the resin composition for molding has high degree of freedom of product design with a smaller size and higher precision, suppresses cracking of the molded product due to rapid temperature change, and has excellent mechanical strength and flowability. Therefore, the resin composition for molding is usable for applications of an automobile part, an electrical and electronic part, a heating device part, and the like, in which substitution of metals is strongly desired.

### Examples

Hereinafter, the present invention will be specifically described with reference to Examples, but is not limited to ranges of these Examples.

### (Synthesis of Plate-like Alumina Particles)

In a mortar, 100 parts by mass of aluminum hydroxide (manufactured by Nippon Light Metal Company, Ltd.; average particle diameter: 9.4 pm), 0.65 part by mass of silica particles (manufactured by Kanto Chemical Co., Inc.), and 3.44 parts by mass of molybdenum trioxide (manufactured by TAIYO KOKO CO., LTD.) were mixed to obtain a mixture. The resulting mixture was put into a crucible and then calcined at 1,100°C for 10 hours in a ceramic electric furnace. The calcined mixture was taken out from the crucible, then cracked, and immersed in an 0.5% ammonia aqueous solution at normal temperature for 30 minutes for washing. Subsequently, the resultant was classified by a sieve having an opening of 53 µ to remove a coarse particle component. As a result, a thin blue powder (EF1) was obtained. The obtained powder was subjected to XRD measurement. Sharp peak scattering derived from α-alumina appeared and a peak derived from an alumina crystal other than an α crystal structure was not observed. Thus, the obtained powder was confirmed to be a plate-like alumina having a dense crystal structure.

Herein, a produced sample was placed on a measurement sample holder with a depth of 0.5 mm, and pushed so as to be made flat under a constant load, the measurement sample holder was set in a wide-angle X-ray diffraction (XRD) device (Rint-Ultima manufactured by Rigaku Corporation), and the XRD measurement was performed under conditions including Cu/Kα radiation, 40 kV/30 mA, a scan speed of 2°/min, and a scanning range of 10 to 70°.

### (Measurement of Average Particle Diameter L)

The median diameter D50 (µm) of the plate-like alumina obtained in Synthesis Example 1 (hereinafter sometimes referred to as "EF1") was determined as an average particle diameter L by a laser diffraction-type particle size distribution meter HELOS(H3355)&RODOS (manufactured by Japan Laser Corporation) under conditions including a dispersion pressure of 3 bar and a suction pressure of 90 mbar. The average particle diameter L was 6.6 µm.

### (Measurement of Average Thickness D)

The thicknesses of 50 samples described above were measured using a scanning electron microscope (SEM), and the average of the measured thicknesses was used as an average thickness D (pm). The average thickness D was 0.5 µm.

The aspect ratio L/D of the plate-like alumina obtained by synthesis was 13.2 from the aforementioned values.

### (Production of Carboxy Group-Containing Polyphenylene Sulfide Resin (PPS-1))

In a 150-L autoclave equipped with a stirrer blade and connected to a pressure gauge, a thermometer, a condenser, a decanter, and a rectification tower, 33.222 kg (226 mol) of p-dichlorobenzene (hereinafter abbreviated as "p-DCB"), 2.280 kg (23 mol) of N-methyl-2-pyrrolidone (hereinafter abbreviated as "NMP"), 27.300 kg (in terms of NaSH, 230 mol) of a 47.23% by mass NaSH aqueous solution, and 18.533 g (in terms of NaOH, 228 mol) of a 49.21% by mass NaOH aqueous solution were paced, and heated to 173°C over five hours with stirring under a nitrogen atmosphere, to distill 27.300 kg of water. The autoclave was then closed. p-DCB distilled by azeotropy during dehydration was separated by the decanter, and as needed, returned to the autoclave. In the autoclave after completion of the dehydration, fine particles of anhydrous sodium sulfide composition were dispersed in p-DCB. The NMP content in this composition was 0.069 kg (0.7 mol). This indicated that 97 mol% (22.3 mol) of the placed NMP was hydrolyzed into a sodium salt of a ring-opened form of NMP (4-(methylamino)butyrate) (hereinafter abbreviated as "SMAB"). The amount of SMAB in the autoclave was 0.097 mol per mole of sulfur atom present in the autoclave. The theoretical amount of water removed when the placed NaSH and NaOH are all changed into anhydrous Na2S is 27.921 g. This indicated that 401 g (22.3 mol) of water out of 621 g (34.5 mol) of residual water in the autoclave is consumed by the hydrolysis reaction of NMP with NaOH, this water is not present, and the remaining 220 g (12.2 mol) of water or crystallization water remains in the autoclave. The amount of water in the autoclave was 0.053 mol per mole of sulfur atom present in the autoclave.

After completion of the aforementioned dehydration process, the inner temperature was cooled to 160°C, a solution containing 47.492 kg (479 mol) of NMP was added, and the inner temperature was increased to 185°C. The amount of water in the autoclave was 0.025 mol per mole of NMP added. When the gauge pressure reached 0.00 MPa, a valve connected to the rectification tower was opened, and the inner temperature was increased to 200°C over one hour. At that time, the outlet temperature of the rectification tower was controlled to be 110°C or lower by cooling and valve opening degree. The mixed steam of the distilled p-DCB and water was condensed by the condenser and separated by the decanter, and the p-DCB was returned to the autoclave. The amount of water distilled was 179 g (9.9 mol), and the amount of water in the autoclave was 41 g (2.3 mol), 0.005 mol per mole of NMP added after the dehydration, or 0.010 mol per mole of sulfur atom present in the autoclave. The amount of SMAB in the autoclave was 0.097 mol per mole of sulfur atom present in the autoclave, which was the same as during the dehydration.

Subsequently, the inner temperature was increased from 200°C to 230°C over three hours, stirred at 230°C for one hour, increased to 250°C, and stirred for one hour. The gauge pressure at an inner temperature of 200°C was 0.03 MPa, and the final gauge pressure was 0.30 MPa. After cooling, 6.5 kg of slurry obtained was poured in 30 L of hot water at 80°C, stirred for one hour, and then filtered. The resultant cake was stirred with 30 L of hot water for one hour, washed, and then filtered. Subsequently, 30 L of water was added to the obtained cake, the pH was adjusted to 4.5 with acetic acid, and the mixture was stirred at normal temperature for one hour and then filtered. To the obtained cake, 30 L of hot water was added, and the mixture was stirred for one hour, filtered twice, and dried at 120°C overnight by a hot air circulating dryer, to obtain a carboxy group-containing polyphenylene sulfide resin (hereinafter referred to as "PPS-1") in a white powder form. The melt viscosity of the obtained polymer was 98 Pa·s, and the carboxy group content was 55.4 µmol/g. The melting point (Tm) was 282°C, and the recrystallization temperature (Tc2) was 203°C.

### (Blending and Production of Composition)

Materials were uniformly mixed in a tumbler in accordance with composition components and blending amounts (all indicate % by mass) listed in Table. Subsequently, the mixed materials were placed in a twin-screw extruder "TEM-35B" with a vent manufactured by TOSHIBA MACHINE CO., LTD., and melt-kneaded at a resin component discharge amount of 25 kg/hr, a screw rotation number of 250 rpm, a ratio of the resin component discharge amount (kg/hr) to the screw rotation number (rpm) (discharge amount/screw rotation number) of 0.1 (kg/hr·rpm), and a set resin temperature of 330°C, to obtain pellets of a resin composition.

### (Production of Molded Body for Evaluation)

The obtained pellets were supplied to a Sumitomo-Nestal injection molding machine (SG75-HIPRO MIII) in which the cylinder temperature was set to 320°C. The pellets were injection-molded using a D2 sheet piece molding die in which the die temperature was adjusted to 150°C or a dumbbell test piece molding die configured so as to pour the composition from both gripping portions.

### (Thermal Shock Test)

A steel insert block member having a length of 25 mm, a width of 40 mm, and a thickness of 10 mm was prepared. The steel insert block member had two through-holes that had a diameter of 3.55 mm, were parallel to the thickness direction of the member, and had centers of the diameters on a line that connected the midpoints of sides in the longitudinal direction of the member to each other and was parallel to sides in the transverse direction of the member. The centers of the diameters of the two through-holes were positioned 20 mm away from the midpoint of the line as the center. Next, the insert block member was disposed inside an injection-molding die using the two through-holes and two steel columnar pins disposed inside the injection-molding die so that the insert block member was held inside the injection-molding die. Furthermore, the resin composition for molding was injection-molded into pellets, and the pellets of the resin composition for molding was injection-molded into a molded product using an injection molding die designed so that the whole outer circumferential surface of the insert block member was covered with the resin composition for molding having a film thickness of 1 mm. Using the resultant molded product in which the resin composition for molding encompassed the steel insert block member, a thermal shock test of "one cycle: at -40°C for 0.5 hour to at 150°C for 0.5 hour" was performed in a gas-phase thermal shock test machine. The cycle number when a crack occurred was recorded. This thermal shock test is one of methods for evaluating heat cycle characteristics.

### (Measurement of Thermal Conductivity)

From the produced D2 sheet piece, a test piece (heat-dissipating member) of 10 mm × 10 mm was cut out, and the heat diffusion ratio and the specific heat at 25°C were measured by a heat diffusion ratio measurement device (LFA467 Hyper Flash, manufactured by NETZSCH Japan K.K.). Subsequently, the density of the heat-dissipating member was measured by Archimedes' method. From a product of the heat diffusion ratio, the specific heat, and the density, the thermal conductivity of the heat-dissipating member was estimated.

### (Measurement of Weld Bending Strength)

The weld bending strength was measured using the produced dumbbell molded body in accordance with ISO178.

### (Blending Table and Evaluation Results)

**[Table 1]**

| | | Example 1 | Example 2 | Example 3 | Comparative Example 1 | Comparative Example 2 | Comparative Example 3 |
|---|---|---|---|---|---|---|---|
| Composition and part by mass | PPS-1 | 33 | 31 | 41 | 33 | 33 | 33 |
| | EF1 | 47 | 47 | | | 47 | |
| | Boron nitride | | | 33 | | | |
| | CF1 | | | | 47 | | |
| | talc | | | | | | 47 |
| | Aspect ratio | 13.2 | 13.2 | 15 | 7 | 13.2 | |
| | Glass fibers | 18 | 18 | 23 | 18 | 18 | 18 |
| | Thermoplastic resin | 2 | 4 | 3 | 2 | 0.0 | 0.0 |

| Evaluation results | | | | | | | |
|---|---|---|---|---|---|---|---|
| Weld bending strength (MPa) | | 82.0 | 75.0 | 44.0 | 109.0 | 86.0 | 40.2 |
| Heat cycle characteristics (times) | | 80 | 120 | 36 | 21 | 8 | 2.8 |
| Thermal conductivity (W/mK) | | 0.76 | 0.8 | 1.1 | 0.77 | 0.79 | 0.6 |

Various raw materials used in Examples and Comparative Examples in the blending table are as follows.
Boron nitride: boron nitride SGP manufactured by Denka Company Limited
CF1: plate-like alumina PWA9 manufactured by FUJIMI INCORPORATED
Talc: PK-S manufactured by HAYASHI KASEI CO., LTD.
Glass fibers: glass fibers FT-562 manufactured by Owens Corning
Thermoplastic resin: BONDFAST 7M manufactured by Sumitomo Chemical Co., Ltd.
[Ethylene-glycidyl methacrylate-methyl acrylate copolymer, glass transition temperature (Tg) -33°C]

## Claims

1. A resin composition for molding comprising as essential components:
a plate-like filler having an aspect ratio of 10 to 500 (A) ;
a polyarylene sulfide resin (B);
a thermoplastic resin having a glass transition temperature (Tg) of 20°C or lower (C); and
glass fibers (D),
the plate-like filler (A) being contained in an amount of 30 to 70 parts by mass relative to 100 parts by mass of a sum of the plate-like filler (A), the polyarylene sulfide resin (B), the thermoplastic resin (C), and the glass fibers (D) .

2. The resin composition for molding according to claim 1, wherein the filler (A) is α-alumina.

3. The resin composition for molding according to claim 1 or 2, wherein the thermoplastic resin (C) is contained in an amount of 0.5 to 10 parts by mass relative to 100 parts by mass of the sum of the plate-like filler (A), the polyarylene sulfide resin (B), the thermoplastic resin (C), and the glass fibers (D).

4. The resin composition for molding according to any one of claims 1 to 3, wherein the glass fibers (D) are contained in an amount of 15 to 25 parts by mass relative to 100 parts by mass of the sum of the plate-like filler (A), the polyarylene sulfide resin (B), the thermoplastic resin (C), and the glass fibers (D).

5. The resin composition for molding according to any one of claims 1 to 4, wherein the thermoplastic resin (C) is a polymer containing a polymerization unit of an olefin.

6. The resin composition for molding according to any one of claims 1 to 5, wherein the thermoplastic resin (C) is a polymer containing a polymerization unit of one or more types of (meth)acrylates having any functional group of a carboxy group, an acid anhydride group, or a glycidyl ester group, and another polymerization unit of an olefin.

7. A molded body of the resin composition for molding according to any one of claims 1 to 6.
